# FASCICULE DE BREVET EUROPEEN

(11) **EP 3 947 917 B1**
(45) Date de publication et mention de la délivrance du brevet: **22.02.2023**
(21) Numéro de dépôt: 20726213.0
(22) Date de dépôt: 16.03.2020
(51) Int. Cl.: F01D 5/18, F01D 9/06

(54) **AUBE POUR UNE TURBOMACHINE, DISTRIBUTEUR POUR UNE TURBOMACHINE ET TURBOMACHINE ASSOCIÉS**
SCHAUFEL FÜR EINE TURBOMASCHINE, ZUGEHÖRIGES LEITAPPARAT FÜR EINE TURBOMASCHINE UND TURBOMASCHINE
AIRFOIL FOR A TURBOMACHINE, CORRESPONDING DISTRIBUTOR FOR A TURBOMACHINE AND TURBOMACHINE

(30) Priorité: 03.04.2019 FR 1903586
(43) Date de publication de la demande: 09.02.2022
(73) Titulaire: SAFRAN AIRCRAFT ENGINES, 75015 Paris (FR)
(72) Inventeur: SIMON, Matthieu, 77550 MOISSY-CRAMAYEL (FR); BACHA, Jean-Luc, 77550 MOISSY-CRAMAYEL (FR); DANRE, Paul, 77550 MOISSY-CRAMAYEL (FR); OSTINO, Léandre, 77550 MOISSY-CRAMAYEL (FR)
(74) Mandataire: Cabinet Beau de Loménie
(86) Numéro de dépôt international: PCT/FR2020/050559
(87) Numéro de publication internationale: WO 2020/201653

(56) Documents cités:
- GB-A- 2 386 926

## Description

### Domaine Technique

La présente invention concerne le domaine des turbomachines aéronautiques, et plus précisément une aube d'un distributeur de turbine pour turbomachine, et une turbomachine comportant un tel distributeur.

### Technique antérieure

Les distributeurs haute pression ou basse pression de turbomachines, tels que décrits dans le document FR 2 955 145, comportent notamment des aubes fixes maintenues à chacune de leurs extrémités par une plateforme interne et une plateforme externe, ces derniers définissant une veine de circulation de gaz éjectés par la chambre de combustion. Ces aubes permettent de diriger l'écoulement des gaz sortant de la chambre de combustion sur les aubes de rotor de la turbine. Ces aubes sont creuses, et comportent au moins une cavité, ou deux cavités, notamment une cavité de bord d'attaque et une cavité de bord de fuite, dont une extrémité débouche à l'extérieur de la veine. GB 2 386 926 A décrit un autre exemple d'aube creuse.

Ces aubes étant exposées aux gaz chauds de combustion, il est nécessaire de les refroidir pour atténuer les contraintes thermiques. Une solution consiste à utiliser de l'air provenant d'un autre élément de la turbomachine, par exemple le compresseur. Plus précisément, de l'air relativement frais est prélevé en amont de la chambre de combustion à la sortie d'un étage du compresseur. Cet air est injecté dans la ou les cavité(s) des aubes par l'une et l'autre des extrémités de celles-ci, pour les refroidir de l'intérieur. L'air s'échappe ensuite dans la veine par des trous réalisés dans les aubes et communiquant avec la ou les cavité(s) de l'aube et avec la veine, l'air de refroidissement créant un film protecteur d'air plus frais s'écoulant le long de la surface extérieure de l'aube.

En outre, de manière générale, une chemise est enchassée dans la ou les cavité(s) d'une telle aube. Cette chemise comporte une pluralité de trous sur toute sa surface s'étendant entre les plateformes. La chemise comporte une paroi de fond, fermée, à une extrémité et débouche à l'extérieur de la veine, du même côté que la cavité qui la renferme. L'air relativement frais prélevé en amont de la chambre de combustion est injecté dans les chemises au travers des plateformes. L'air frais pénètre à l'intérieur de la chemise pour refroidir l'aube, de l'intérieur, par impact. Néanmoins, l'intégration d'une telle chemise dans un profil aérodynamique impose d'avoir un profil d'aube faiblement cambré, afin de rendre possible l'insertion de la chemise dans la cavité. Cette contrainte limite la possibilité d'envisager des variations de profils aérodynamiques, notamment l'augmentation de la cambrure de l'aube.

Il existe donc un besoin pour un dispositif permettant de résoudre le problème technique ci-dessus.

### Exposé de l'invention

Le présent exposé concerne une aube pour une turbomachine telle que définie dans la revendication 1, destinée à être disposée autour d'un axe en s'étendant radialement entre une extrémité radialement externe et une extrémité radialement interne, l'aube comprenant au moins une cavité de refroidissement débouchant à l'extrémité radialement externe de l'aube et à l'extrémité radialement interne de l'aube, l'aube comprenant au moins une première chemise tubulaire et au moins une deuxième chemise tubulaire engagées chacune dans la cavité, l'extrémité radialement externe de la première chemise débouchant à l'extrémité radialement externe de l'aube, et l'extrémité radialement interne de la deuxième chemise débouchant à l'extrémité radialement interne de l'aube. Un axe central de ladite aube présente un rayon de courbure compris entre 30 et 500 mm, de préférence entre 30 et 100 mm.

Les extrémités de l'aube et des chemises sont par exemple les extrémités radiales interne et externe lorsque l'aube est montée dans une turbomachine. L'aube est de préférence creuse, la ou les cavités s'étendant de part et d'autre de l'aube, à chaque extrémité de celle-ci. En d'autres termes, une cavité de l'aube est équivalente à un orifice traversant toute la hauteur de l'aube, et débouchant aux extrémités radialement interne et externe. Les extrémités peuvent par exemple être des brides disposées autour de l'aube à chaque extrémité de celle-ci, sur lesquelles sont fixées les extrémités des chemises.

Les chemises selon l'art antérieur ne permettent pas de concevoir des aubes dont le rayon de courbure serait inférieur à 90 mm. En particulier, les aubes de turbine présentent habituellement des rayons de courbure compris entre 90 et 500 mm. Les chemises selon le présent exposé permettent de fabriquer des aubes présentant un rayon de courbure plus faible.

Selon le présent exposé, la première chemise est ainsi insérée dans la cavité de refroidissement depuis l'extrémité radialement externe, et la deuxième chemise est ainsi insérée dans la cavité de refroidissement depuis l'extrémité radialement interne. En d'autres termes, lors du montage des chemises, les chemises sont insérées dans la cavité selon deux directions différentes de montage. Cela permet d'avoir deux chemises courtes, au lieu d'une chemise longue s'étendant sur toute la longueur de la cavité. Il est ainsi possible d'envisager une courbure importante du profil aérodynamique, tout en conservant un refroidissement efficace de l'aube, sur toute la hauteur de celle-ci. Cela permet d'avoir plus de latitude pour améliorer le profil aérodynamique des aubes d'un distributeur de turbine, par exemple, et ainsi améliorer le rendement turbine.

Dans certains modes de réalisation l'extrémité radialement externe de la première chemise est une première extrémité fixée sur l'extrémité radialement externe de l'aube, et l'extrémité radialement interne de la deuxième chemise est une première extrémité fixée sur l'extrémité radialement interne de l'aube, la première chemise et la deuxième chemise comprenant en outre chacune une deuxième extrémité libre, les deuxièmes extrémités libres des première et deuxième chemises étant en vis-à-vis l'une de l'autre dans la cavité de refroidissement de l'aube.

Par « en vis-à-vis l'une de l'autre », on comprend que les deuxièmes extrémités libres se font face, soit en étant en contact l'une de l'autre, soit en étant espacées l'une de l'autre. Dans ce deuxième cas de figure, les deuxièmes extrémités libres sont séparées l'une de l'autre de manière à ce qu'aucune cloison n'existe entre celles-ci. Ainsi, les deuxièmes extrémités libres des chemises ne se chevauchent pas, facilitant ainsi le montage de chaque chemise à une extrémité de l'aube.

Dans certains modes de réalisation, la première extrémité de chaque chemise comprend une collerette d'extrémité prenant appui sur les extrémités de l'aube.

Dans certains modes de réalisation, la collerette est soudée ou brasée aux extrémités de l'aube.

Cette configuration permet d'optimiser le montage des chemises et le maintien de celles-ci sur l'aube.

Dans certains modes de réalisation, selon une direction radiale à l'axe, une hauteur de la première chemise est différente d'une hauteur de la deuxième chemise entre la première extrémité et la deuxième extrémité desdites chemises, la hauteur de chaque chemise étant inférieure à 70%, de préférence inférieure à 60%, de préférence encore inférieure à 50% de la longueur de la cavité dans laquelle lesdites chemises sont engagées.

La hauteur des chemises désigne la longueur selon leur axe principal, c'est-à-dire la direction radiale lorsque l'aube est montée dans une turbomachine. Ces valeurs de hauteur des chemises, par rapport à la hauteur totale de l'aube, permet d'obtenir des cambrures plus importantes sur au moins une portion de l'aube. L'aube peut par exemple présenter une cambrure plus importante au voisinage de la première extrémité, qu'au voisinage de la deuxième extrémité de celle-ci.

Dans certains modes de réalisation, la hauteur de la première chemise est différente de la hauteur de la deuxième chemise.

Cela permet d'adapter la hauteur de chaque chemise en fonction du profil aérodynamique souhaité de l'aube.

Dans certains modes de réalisation, un axe central de ladite aube présente un rayon de courbure variable entre les extrémités de l'aube.

L'axe central de l'aube et des chemises désigne l'axe principal selon lequel l'aube et les chemises s'étendent. Ces rayons de courbure sont plus faibles que les rayons de courbure existant sur les aubes comprenant une unique chemise s'étendant sur toute la hauteur de l'aube, et permettent d'améliorer le rendement des turbines sur lesquelles les aubes sont montées.

Dans certains modes de réalisation, la deuxième extrémité de chaque chemise comprend une paroi de fond, une distance entre les parois de fond de chacune des chemises étant inférieur à 10mm.

Ces valeurs permettent de minimiser les portions de la cavité ne comprenant aucune chemise, c'est-à-dire l'espace entre les deuxièmes extrémités de la première et de la deuxième chemise, et ainsi d'améliorer le refroidissement de l'aube.

Dans certains modes de réalisation, la deuxième extrémité de l'une de la première et de la deuxième chemise comprend une protubérance faisant saillie depuis ladite deuxième extrémité, la deuxième extrémité de l'autre de la première et de la deuxième chemise comprenant un orifice, la protubérance étant insérée dans l'orifice.

La protubérance peut par exemple être insérée dans l'orifice par pression. Ce mode de liaison permet de solidariser les première et deuxième chemises entre elles, et ainsi de limiter le risque de mouvement des chemises l'une par rapport à l'autre.

Dans certains modes de réalisation, l'aube comprend une cavité de bord d'attaque et une cavité de bord de fuite séparée de la cavité de bord d'attaque par une paroi, chacune de ces cavités débouchant sur les extrémités radialement interne et externe de l'aube, une première chemise étant engagée dans chacune de la cavité de bord d'attaque et de bord de fuite, et une deuxième chemise étant engagée dans chacune de la cavité de bord d'attaque et de bord de fuite.

En d'autres termes, l'aube comprend quatre chemises. Deux premières chemises sont insérées depuis l'extrémité radialement externe, dans la cavité de bord de fuite et la cavité de bord d'attaque, et deux deuxièmes chemises sont insérées depuis l'extrémité radialement interne, dans la cavité de bord de fuite et la cavité de bord d'attaque. Les rayons de courbure des cavités de bord d'attaque et de bord de fuite peuvent être différents l'un de l'autre.

Dans certains modes de réalisation, les extrémités radialement interne et externe de l'aube sont des plateformes coaxiales de distributeur configurées pour s'étendre autour d'un axe, l'aube s'étendant entre les plateformes ayant chacune une face de veine configurée pour délimiter une veine de circulation de gaz et une face opposée à la face de veine, la au moins une cavité de l'aube débouchant sur la face opposée à la face de veine des deux plateformes, une extrémité de la première chemise débouchant sur la face opposée à la face de veine de la première plateforme, et une extrémité d'une deuxième chemise débouchant sur la face opposée à la face de veine de la deuxième plateforme.

Le présent exposé concerne également un distributeur pour une turbomachine destiné à être disposée autour d'un axe en s'étendant radialement entre une plateforme radialement interne et une plateforme radialement externe, chaque plateforme comprenant une face de veine destinée à délimiter un canal d'écoulement de fluide et une face d'extrémité opposée à la face de veine, le distributeur comprenant au moins une aube selon l'un quelconque des modes de réalisation précédents, l'au moins une cavité de refroidissement de l'aube débouchant sur la face d'extrémité de la plateforme radialement interne et sur la face d'extrémité de la plateforme radialement externe, l'extrémité radialement interne de la première chemise débouchant sur la face d'extrémité de la plateforme radialement interne, et l'extrémité radialement externe de la deuxième chemise débouchant sur la face d'extrémité de la plateforme radialement externe.

Le présent exposé concerne également une turbomachine comprenant la turbine selon le présent exposé.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] la figure 1 représente une vue en perspective extérieure d'un distributeur de turbine pour une turbomachine selon le présent exposé ;

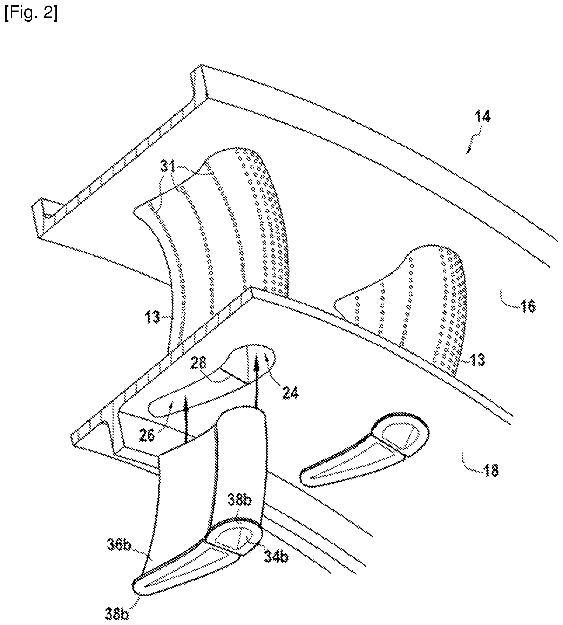

[Fig. 2] la figure 2 représente une vue en perspective intérieure du distributeur de turbine de la figure 1 ;
[Fig. 3] la figure 3 représente une vue en perspective de chemises du présent exposé insérées dans une aube creuse ;
[Fig. 4] la figure 4 représente une vue en perspective de chemises selon l'art antérieur insérées dans une aube creuse ;
[Fig. 5] la figure 5 représente une vue en perspective d'un exemple modifié des chemises de la figure 3.

### Description des modes de réalisation

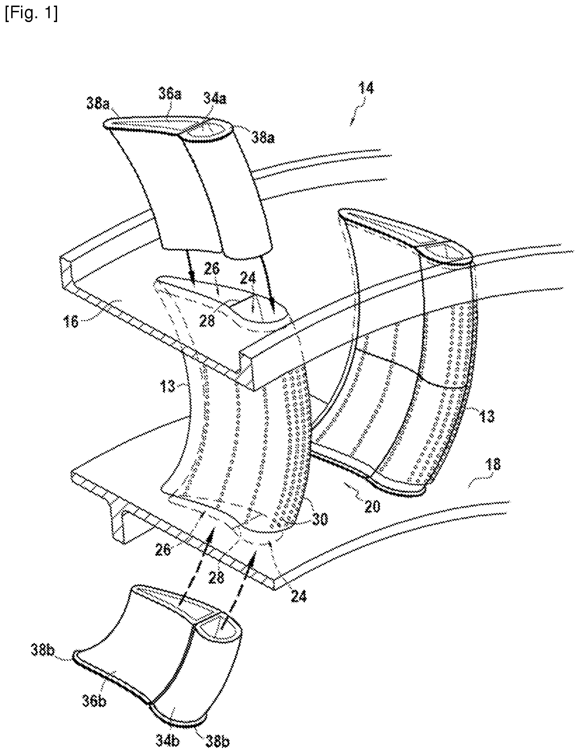

La figure 1 représente un secteur 14 d'un distributeur de turbine pour turbomachine haute pression, le distributeur pouvant être sectorisé et comportant une couronne de pales, ou aubes fixes 13 creuses, agencées entre deux plateformes coaxiales : une plateforme externe 16 et une plateforme interne 18. Les plateformes 16, 18 peuvent former un bloc annulaire, ou comprendre une pluralité de secteurs d'anneaux mis circonférentiellement bout à bout. Elles délimitent une veine de circulation de gaz 20 dans laquelle se trouvent les aubes 13 réparties régulièrement angulairement entre les plateformes 16, 18. Deux aubes 13 sont représentées. Chaque aube 13 comporte une cavité de bord de fuite 26 débouchant à l'extérieur de la veine 20 au travers de la plateforme 16 et de la plateforme 18, et au moins une cavité de bord d'attaque 24 débouchant à l'extérieur de la veine 20 au travers de la plateforme 16 et de la plateforme 18, les cavités 24 et 26 étant séparée l'une de l'autre par une paroi 28. Ces cavités communiquent avec la veine 20 par des rangées de trous 30, 31 s'étendant axialement et/ou radialement entre la plateforme interne 18 et la plateforme externe 16 le long des aubes 13 pour déboucher dans la veine 20. Un gaz circulant depuis l'extérieur de la veine 20 peut ainsi pénétrer dans les cavités 24, 26, s'écouler dans l'aube 13, puis être évacué dans la veine 20 par l'intermédiaire des trous 30, 31, permettant ainsi le refroidissement de l'aube 13.

Une première chemise tubulaire 36a est insérée dans la cavité de bord de fuite 26, et une première chemise tubulaire 34a est insérée dans la cavité de bord d'attaque 24, depuis la face externe de la plateforme externe 16. Par « externe », on comprend la face de la plateforme 16 opposée à la veine 20.

En outre, une deuxième chemise tubulaire 36b est insérée dans la cavité de bord de fuite 26, et une deuxième chemise tubulaire 34b est insérée dans la cavité de bord d'attaque 24, depuis la face externe de la plateforme interne 18. Par « externe », on comprend la face de la plateforme 16 opposée à la veine 20.

Chacune des chemises tubulaires 34a, 34b, 36a, 36b est creuse, peut être en métal, par exemple un alliage à base de Nickel ou de Cobalt, ou en matériau composite, et sont percées d'une pluralité de trous (non représentés sur les figures). Les premières chemises 34a, 36a comportent en outre chacune une collerette 38a prenant appui sur la face externe de la plateforme externe 16, et sont fixées à celle-ci, par exemple par soudage ou par brasage. Les deuxièmes chemises 34b, 36b comportent chacune une collerette 38b prenant appui sur la face externe de la plateforme interne18, et sont fixées à celle-ci, par exemple par soudage ou par brasage.

Les premières chemises 34a, 36a de la cavité de bord d'attaque 24 et de bord de fuite 26 débouchent à l'extérieur de la veine 20 au travers d'une plateforme, ici la plateforme externe 16, tandis que les deuxièmes chemises 34b, 36b de la cavité de bord d'attaque 24 et de bord de fuite 26 débouchent à l'extérieur de la veine 20 au travers de l'autre plateforme, ici la plateforme interne 18. De l'air relativement frais prélevé sur le compresseur est conduit de part et d'autre du distributeur, c'est-à-dire à la fois à l'extérieur de la plateforme externe 16 et à l'extérieur de la plateforme interne 18. L'air de refroidissement peut donc pénétrer dans les chemises 34a, 36a, 34b, 36b pour refroidir les parois intérieures des aubes par effet d'impact puis s'écouler dans la veine au travers des trous desdites aubes 13 pour créer un film de refroidissement autour de chacune d'elles.

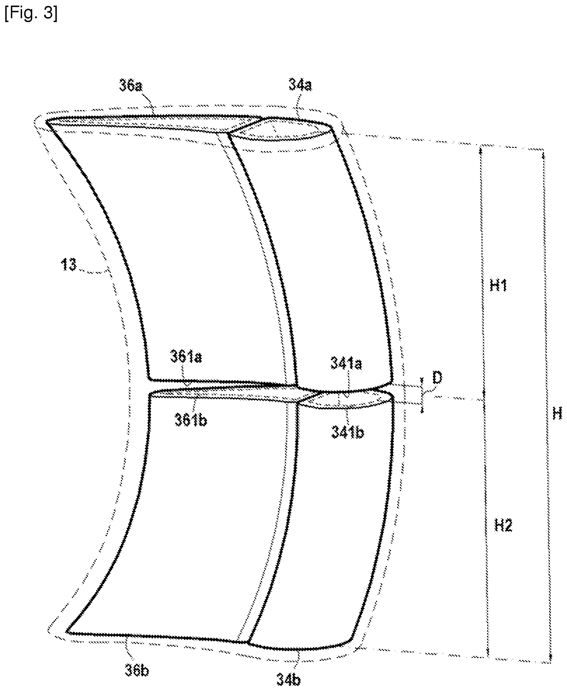

La figure 3 représente l'agencement des chemises 34a, 34b, 36a, 36b lorsque celles-ci sont insérées dans les cavités 24, 26 de l'aube 13, cette dernière étant représentée en pointillés, afin de rendre les chemises visibles par transparence. On notera sur cette figure que les collerettes 38a, 38b ne sont pas représentées, pour simplifier la description.

Les cavités 24, 26 au sein de l'aube 13 présentent une profondeur H, correspondant sensiblement à la hauteur de l'aube 13 selon la direction radiale du distributeur. Les premières chemises 34a, 36a présentent une hauteur H1, et les deuxièmes chemises 34b, 36b présentent une hauteur H2, selon cette direction radiale. Selon le présent mode de réalisation, les hauteurs H1 et H2 sont sensiblement égales. Néanmoins, cet exemple n'est pas limitatif, et les hauteurs H1 et H2 peuvent être différentes, tant que H1 et H2 restent inférieures à 70% de la valeur de H, de préférence inférieures à 60%, de préférence encore inférieures à 50%.

La première chemise de bord de fuite 36a comprend une paroi de fond 361a fermant la chemise 36a à une extrémité opposée à l'extrémité débouchant à l'extérieur de la plateforme externe 16. De même, la deuxième chemise de bord de fuite 36b comprend une paroi de fond 361b fermant la chemise 36b à une extrémité opposée à l'extrémité débouchant à l'extérieur de la plateforme interne 18. Les parois de fond 361a et 361b sont en vis-à-vis l'une de l'autre à l'intérieur de la cavité 26, soit en contact l'une avec l'autre ou alternativement, espacées l'une de l'autre d'une distance D inférieure à 10mm.

De manière similaire, la première chemise de bord d'attaque 34a comprend une paroi de fond 341a fermant la chemise 34a à une extrémité opposée à l'extrémité débouchant à l'extérieur de la plateforme externe 16. De même, la deuxième chemise de bord d'attaque 34b comprend une paroi de fond 341b fermant la chemise 34b à une extrémité opposée à l'extrémité débouchant à l'extérieur de la plateforme interne 18. Les parois de fond 341a et 341b sont en vis-à-vis l'une de l'autre à l'intérieur de la cavité 24, soit en contact l'une avec l'autre ou alternativement, espacées l'une de l'autre de la distance D.

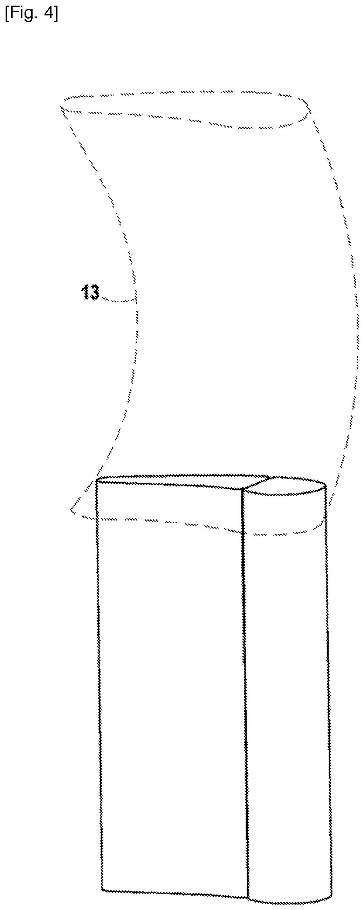

Selon ce mode de réalisation, les premières chemises 34a et 36a sont insérées depuis l'extérieur de la plateforme externe 16, et les deuxièmes chemises 34b et 36b sont insérées depuis l'extérieur de la plateforme interne 18. Ainsi, la courbure de l'aube 13 peut être plus importante que dans une configuration dans laquelle une unique chemise était utilisée pour chaque cavité 24, 26, sur toute la hauteur H. La figure 4 illustre un tel cas de figure selon l'art antérieur, dans lequel l'aube 13 présente une cambrure similaire à la cambrure de l'aube 13 sur la figure 3, et illustre la difficulté d'insérer des chemises dans ce cas de figure.

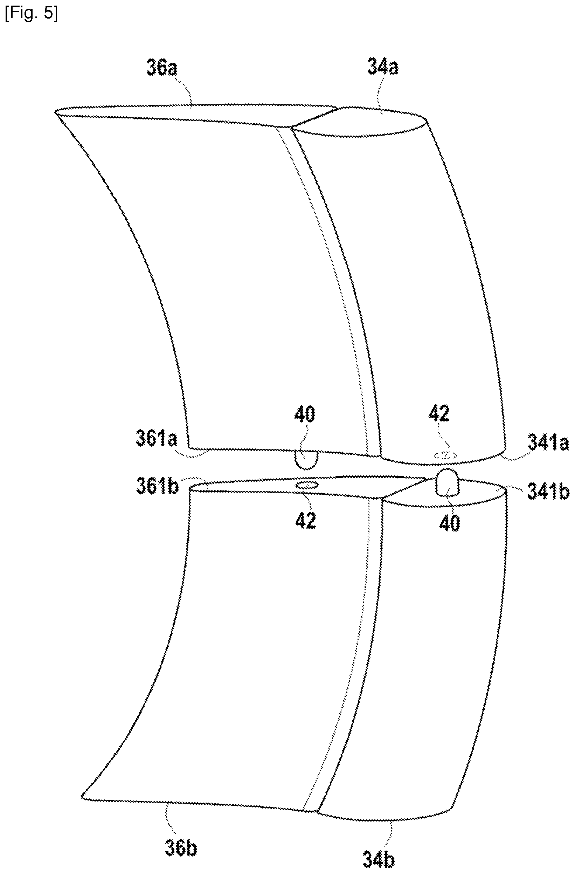

La figure 5 représente un exemple modifié du mode de réalisation de la figure 3, dans lequel les chemises 36a et 34b comprennent chacune un plot 40, pouvant être de forme hémisphérique de rayon inférieur à 10 mm, et faisant saillie dans la direction radiale depuis la paroi de fond 361a et 341b respectivement. Ces plots 40 sont configurés pour assurer un jeu entre les parois de fond 341a et 341b. Le rayon des plots 40 peut de préférence être inférieur de 0,1 mm ou moins à la distance D entre les parois de fond 341a et 341b, afin de limiter les contraintes mécaniques entre les deux chemises. De manière alternative, les plots 40 peuvent également s'insérer dans un orifice 42 réalisé dans la paroi de fond en vis-à-vis, à savoir les parois 361b et 341a respectivement. Cet agencement permet de positionner les chemises l'une par rapport à l'autre, et de limiter les mouvements de l'une par rapport à l'autre. On notera que la position des plots 40 et des orifices 42 n'est pas limitative, les plots 40 pouvant être par exemple prévus sur les parois 361b et 341a, ou 361a et 341a, et les orifices sur les parois 361a et 341b, ou 361b et 341b, ou d'autres combinaisons envisageables.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Aube (13) pour une turbomachine destinée à être disposée autour d'un axe (X) en s'étendant radialement entre une extrémité radialement externe (16) et une extrémité radialement interne (18), l'aube (13) comprenant au moins une cavité (24, 26) de refroidissement débouchant à l'extrémité radialement externe (16) de l'aube et à l'extrémité radialement interne (18) de l'aube, l'aube (13) comprenant au moins une première chemise tubulaire (34a, 36a) et au moins une deuxième chemise tubulaire (34b, 36b) engagées chacune dans la cavité (24, 26), l'extrémité radialement externe de la première chemise débouchant à l'extrémité radialement externe (16) de l'aube, et l'extrémité radialement interne de la deuxième chemise débouchant à l'extrémité radialement interne (18) de l'aube, **caractérisée en ce que** l'aube (13) présente une cambrure de telle sorte qu'un axe central de ladite aube (13) présente un rayon de courbure compris entre 30 et 500 mm, de préférence compris entre 30 et 100 mm.

2. Aube (13) selon la revendication 1, dans laquelle l'extrémité radialement externe de la première chemise (34a, 36a) est une première extrémité fixée sur l'extrémité radialement externe (16) de l'aube, et l'extrémité radialement interne de la deuxième chemise (34b, 36b) est une première extrémité fixée sur l'extrémité radialement interne (18) de l'aube, la première chemise (34a, 36a) et la deuxième chemise (34b, 36b) comprenant en outre chacune une deuxième extrémité libre, les deuxièmes extrémités libres des première et deuxième chemises étant en vis-à-vis l'une de l'autre dans la cavité de refroidissement (24, 26) de l'aube (13).

3. Aube (13) selon la revendication 2, dans laquelle la première extrémité de chaque chemise comprend une collerette d'extrémité (38a, 38b) prenant appui sur les extrémités (16, 18) de l'aube, la collerette (38a, 38b) étant soudée ou brasée auxdites extrémités.

4. Aube (13) selon la revendication 2 ou 3, dans laquelle, selon une direction radiale à l'axe (X), une hauteur (H1) de la première chemise (34a, 36a) est différente d'une hauteur (H2) de la deuxième chemise (34b, 36b) entre la première extrémité et la deuxième extrémité desdites chemises, la hauteur de chaque chemise étant inférieure à 70%, de préférence inférieure à 60%, de préférence encore inférieure à 50% de la longueur de la cavité (24, 26) dans laquelle lesdites chemises sont engagées.

5. Aube (13) selon l'une quelconque des revendications 2 à 4, dans laquelle la deuxième extrémité de chaque chemise comprend une paroi de fond (361a, 361b), une distance (D) entre les parois de fond de chacune des chemises étant inférieure à 10 mm.

6. Aube (13) selon l'une quelconque des revendications 2 à 5, dans laquelle la deuxième extrémité de l'une de la première (34a, 36a) et de la deuxième chemise (34b, 36b) comprend une protubérance (40) faisant saillie depuis ladite deuxième extrémité, la deuxième extrémité de l'autre de la première et de la deuxième chemise comprenant un orifice (42), la protubérance (40) étant insérée dans l'orifice (42).

7. Aube (13) selon l'une quelconque des revendications 1 à 6, dans laquelle l'aube (13) comprend une cavité de bord d'attaque (24) et une cavité de bord de fuite (26) séparée de la cavité de bord d'attaque par une paroi (28), chacune de ces cavités (24, 26) débouchant sur les extrémités radialement interne et externe (16, 18) de l'aube, une première chemise (34a, 36a) étant engagée dans chacune de la cavité de bord d'attaque et de bord de fuite (24, 26), et une deuxième chemise (34b, 36b) étant engagée dans chacune de la cavité de bord d'attaque et de bord de fuite (24, 26).

8. Distributeur (14) pour une turbomachine destiné à être disposée autour d'un axe (X) en s'étendant radialement entre une plateforme radialement interne (16) et une plateforme radialement externe (18), chaque plateforme (16, 18) comprenant une face de veine destinée à délimiter un canal d'écoulement de fluide et une face d'extrémité opposée à la face de veine, le distributeur comprenant au moins une aube (13) selon l'une quelconque des revendications 1 à 7, l'au moins une cavité (24, 26) de refroidissement de l'aube (13) débouchant sur la face d'extrémité de la plateforme radialement interne (16) et sur la face d'extrémité de la plateforme radialement externe (18), l'extrémité radialement interne de la première chemise débouchant sur la face d'extrémité de la plateforme radialement interne (16), et l'extrémité radialement externe de la deuxième chemise débouchant sur la face d'extrémité de la plateforme radialement externe (18).

9. Turbomachine comprenant le distributeur (14) selon la revendication 8.

## Patentansprüche

1. Schaufel (13) für eine Turbomaschine, die bestimmt ist, um eine Achse (X) angeordnet zu sein, indem sie sich radial zwischen einem radial äußeren Ende (16) und einem radial inneren Ende (18) erstreckt, wobei die Schaufel (13) mindestens einen Kühlhohlraum (24, 26) umfasst, der am radial äußeren Ende (16) der Schaufel und am radial inneren Ende (18) der Schaufel ausmündet, wobei die Schaufel (13) mindestens einen ersten rohrförmigen Mantel (34a, 36a) und mindestens einen zweiten rohrförmigen Mantel (34b, 36b) umfasst, die jeweils in den Hohlraum (24, 26) eingreifen, wobei das radial äußere Ende des ersten Mantels am radial äußeren Ende (16) der Schaufel ausmündet und das radial innere Ende des zweiten Mantels am radial inneren Ende (18) der Schaufel ausmündet, **dadurch gekennzeichnet, dass** die Schaufel (13) eine Wölbung aufweist, so dass eine zentrale Achse der Schaufel (13) einen Krümmungsradius aufweist, der zwischen 30 und 500 mm, vorzugsweise zwischen 30 et 100 mm liegt.

2. Schaufel (13) nach Anspruch 1, wobei das radial äußere Ende des ersten Mantels (34a, 36a) ein erstes Ende ist, das auf dem radial äußeren Ende (16) der Schaufel befestigt ist, und das radial innere Ende des zweiten Mantels (34b, 36b) ein erstes Ende ist, das auf dem radial inneren Ende (18) der Schaufel befestigt ist, wobei der erste Mantel (34a, 36a) und der zweite Mantel (34b, 36b) ferner jeweils ein zweites freies Ende umfassen, wobei die zweiten freien Enden des ersten und zweiten Mantels im Kühlhohlraum (24, 26) der Schaufel (13) einander gegenüberliegen.

3. Schaufel (13) nach Anspruch 2, wobei das erste Ende jedes Mantels einen Endkragen (38a, 38b) umfasst, der sich auf den Enden (16, 18) der Schaufel abstützt, wobei der Kragen (38a, 38b) mit den Enden verschweißt oder verlötet ist.

4. Schaufel (13) nach Anspruch 2 oder 3, wobei gemäß einer radialen Richtung zur Achse (X) eine Höhe (H1) des ersten Mantels (34a, 36a) von einer Höhe (H2) des zweiten Mantels (34b, 36b) zwischen dem ersten Ende und dem zweiten Ende der Mäntel unterschiedlich ist, wobei die Höhe jedes Mantels kleiner als 70 %, vorzugsweise kleiner als 60 %, noch vorzugsweiser kleiner als 50 % der Länge des Hohlraums (24, 26) ist, in den die Mäntel eingreifen.

5. Schaufel (13) nach einem der Ansprüche 2 bis 4, wobei das zweite Ende jedes Mantels eine Bodenwand (361a, 361b) umfasst, wobei ein Abstand (D) zwischen den Bodenwänden von jedem der Mäntel kleiner als 10 mm ist.

6. Schaufel (13) nach einem der Ansprüche 2 bis 5, wobei das zweite Ende des ersten (34a, 36a) oder des zweiten Mantels (34b, 36b) einen Vorsprung (40) umfasst, der ab dem zweiten Ende vorsteht, wobei das zweite Ende des anderen von dem ersten oder dem zweiten Mantel eine Öffnung (42) umfasst, wobei der Vorsprung (40) in die Öffnung (42) eingesetzt ist.

7. Schaufel (13) nach einem der Ansprüche 1 bis 6, wobei die Schaufel (13) einen Vorderkantenhohlraum (24) und einen Hinterkantenhohlraum (26) umfasst, der von dem Vorderkantenhohlraum durch eine Wand (28) getrennt ist, wobei jeder dieser Hohlräume (24, 26) am radial inneren und äußeren Ende (16, 18) der Schaufel ausmündet, wobei ein erster Mantel (34a, 36a) sowohl in den Vorder- als auch in den Hinterkantenhohlraum (24, 26) eingreift, und ein zweiter Mantel (34b, 36b) sowohl in den Vorder- als auch in den Hinterkantenhohlraum (24, 26) eingreift.

8. Verteiler (14) für eine Turbomaschine, der bestimmt ist, um eine Achse (X) angeordnet zu sein, indem er sich radial zwischen einer radial inneren Plattform (16) und einer radial äußeren Plattform (18) erstreckt, wobei jede Plattform (16, 18) eine Stromseite umfasst, die bestimmt ist, einen Fluidströmungskanal zu begrenzen, und eine Endseite gegenüber der Stromseite, wobei der Verteiler mindestens eine Schaufel (13) nach einem der Ansprüche 1 bis 7 umfasst, wobei mindestens ein Kühlhohlraum (24, 26) der Schaufel (13) auf der Endseite der radial inneren Plattform (16) und auf der Endseite der radial äußeren Plattform (18) ausmündet, wobei das radial innere Ende des ersten Mantels auf der Endseite der radial inneren Plattform (16) ausmündet und das radial äußere Ende des zweiten Mantels auf der Endseite der radial äußeren Plattform (18) ausmündet.

9. Turbomaschine, die den Verteiler (14) nach Anspruch 8 umfasst.

## Claims

1. A blade (13) for a turbomachine configured to be disposed about an axis (X) and to extend radially between a radially outer end (16) and a radially inner end (18), the blade (13) comprising at least one cooling cavity (24, 26) opening out to the radially outer end (16) of the blade and to the radially inner end (18) of the blade, the blade (13) comprising at least a first tubular liner (34a, 36a) and at least a second tubular liner (34b, 36b) each engaged in the cavity (24, 26), the radially outer end of the first liner opening out to the radially outer end (16) of the blade, and the radially inner end of the second liner opening out to the radially inner end (18) of the blade, **characterized in that** the blade (13) has a camber such that a central axis of said blade (13) has a radius of curvature between 30 and 500 mm, preferably between 30 and 100 mm.

2. The blade (13) according to claim 1, wherein the radially outer end of the first liner (34a, 36a) is a first end fixed on the radially outer end (16) of the blade, and the radially inner end of the second liner (34b, 36b) is a first end fixed on the radially inner end (18) of the blade, the first liner (34a, 36a) and the second liner (34b, 36b) each further comprising a second free end, the second free ends of the first and second liners facing each other in the cavity (24, 26) for cooling the blade (13).

3. The blade (13) according to claim 2, wherein the first end of each liner comprises an end flange (38a, 38b) bearing on the ends (16, 18) of the blade, the flange (38a, 38b) being welded or brazed to said ends.

4. The blade (13) according to claim 2 or 3, wherein, along a direction radial to the axis (X), a height (H1) of the first liner (34a, 36a) is different from a height (H2) of the second liner (34b, 36b) between the first end and the second end of said liners, the height of each liner being less than 70%, preferably less than 60%, more preferably less than 50% of the length of the cavity (24, 26) in which said liners are engaged.

5. The blade (13) according to any one of claims 2 to 4, wherein the second end of each liner comprises a bottom wall (361a, 361b), a distance (D) between the bottom walls of each of the liners being less than 10 mm.

6. The blade (13) according to any one of claims 2 to 5, wherein the second end of one of the first (34a, 36a) and the second liner (34b, 36b) comprises a protrusion (40) protruding from said second end, the second end of the other of the first and second liner comprising an orifice (42), the protrusion (40) being inserted into the orifice (42).

7. The blade (13) according to any one of claims 1 to 6, wherein the blade (13) comprises a leading edge cavity (24) and a trailing edge cavity (26) separated from the leading edge cavity by a wall (28), each of these cavities (24, 26) opening out on the radially inner and outer ends (16, 18) of the blade, a first liner (34a, 36a) being engaged in each of the leading edge and trailing edge cavity (24, 26), and a second liner (34b, 36b) being engaged in each of the leading edge and trailing edge cavity (24, 26).

8. A nozzle (14) for a turbomachine configured to be disposed about an axis (X) and to extend radially between a radially inner platform (16) and a radially outer platform (18), each platform (16, 18) comprising a flowpath face configured to delimit a fluid flow channel and an end face opposite to the flowpath face, the nozzle comprising at least one blade (13) according to any one of claims 1 to 7, the at least one cavity (24, 26) for cooling the blade (13) opening out on the end face of the radially inner platform (16) and on the end face of the radially outer platform (18), the radially inner end of the first liner opening out on the end face of the radially inner platform (16), and the radially outer end of the second liner opening out on the end face of the radially outer platform (18).

9. A turbomachine comprising the nozzle (14) according to claim 8.
